# EUROPÄISCHE PATENTSCHRIFT

(11) **EP 2 100 352 B1**
(45) Veröffentlichungstag und Bekanntmachung des Hinweises auf die Patenterteilung: **15.10.2014**
(21) Anmeldenummer: 07856301.2
(22) Anmeldetag: 29.11.2007
(51) Int. Cl.: H02B 1/30

(54) **SCHALTSCHRANKANORDNUNG**
ELECTRICAL CABINET ARRANGEMENT
DISPOSITIF D'ARMOIRE DE COMMANDE

(30) Priorität: 12.12.2006 DE 102006058779
(43) Veröffentlichungstag der Anmeldung: 16.09.2009
(73) Patentinhaber: RITTAL GmbH & Co. KG, 35745 Herborn (DE)
(72) Erfinder: SCHELL, Michael, 35687 Dillenburg (DE); BECKER, Tobias, 35398 Lützellinden (DE); STENFERT, René, 3401 RB Eijsselstein (NL)
(74) Vertreter: Tönhardt, Marion
(86) Internationale Anmeldenummer: PCT/EP2007/010347
(87) Internationale Veröffentlichungsnummer: WO 2008/071309

(56) Entgegenhaltungen:
- DE-A1- 1 515 561
- DE-A1- 4 210 679
- DE-C1- 4 013 379
- GB-A- 2 305 006

## Beschreibung

Die Erfindung bezieht sich auf eine Schaltschrankanordnung mit mindestens einem Schaltschrank, der mittels Wandabschnitten in mehrere allseitig umschlossene quaderförmige Teilräume unterteilt oder unterteilbar ist, wozu vertikale Wandabschnitte mit horizontaler Unterteilung vorgesehen sind.

Eine Schaltschrankanordnung dieser Art ist in der GB 2 305 006 A angegeben. Mindestens ein Schaltschrank der Schaltschrankanordnung weist vertikale Rahmenschenkel und Montageschienen auf und ist mittels Wandabschnitte umfassenden Seitenwandabschnitte, eine rückseitige Montageplatte und horizontale Wandabschnitte in quaderförmige Teilräume unterteilt. Durch die Seitenwandabschnitte der dem Frontbereich der Schaltschrankanordnung zugekehrten Teilräume sind horizontale Versorgungsstromschienen herausgeführt, die mit seitlich angeordneten vertikalen Hauptsammelschienen verbunden sind.

Weitere Schaltschrankanordnungen mit Teilräumen sind in der DE 1 515 561 A und in der DE 42 10 679 A1 gezeigt.

Eine weitere Schaltschrankanordnung mit einem Schaltschrank ist in der DE 10 2004 054 173 A1 angegeben. Bei diesem bekannten Schaltschrank ist zum Aufbau eines normgerechten Niederspannungsschaltschrankes der Innenraum in mehrere Teilräume aufgeteilt, die mittels vertikaler Trennwände voneinander getrennt sind, nämlich in einen Geräteraum für anwenderseitige Geräte, einen Kabelanschlussraum zum Hindurchleiten von Kabeln und einen Sammelschienenraum für die Stromzuführung mittels Stromsammelschienen, die mit einem Verteilschienensystem elektrisch verbunden sind, mit dem den Geräten in dem Geräteraum die elektrische Energie zugeführt wird. Hierbei ist die Trennwand, die den im frontseitigen Bereich befindlichen Geräteraum von dem im rückwärtigen Bereich befindlichen Sammelschienenraum trennt, aus einem vorderen und hinteren Wandabschnitt ausgebildet, zwischen deren die vertikalen Verteilerschienen angeordnet sind. Der hintere und der vordere Wandabschnitt sind durch horizontale Trennlinien in mehrere Segmente unterteilt, die bei beiden Wandabschnitten unterschiedliche Höhe aufweisen, um dadurch eine Anpassung an unterschiedliche Schaltschrankhöhen vornehmen zu können. In dem vorderen Wandabschnitt sind Durchbrüche angeordnet, durch welche hindurch Anschlusssteckfahnen an einem Einschub mit den Verteilschienen kontaktierbar sind. Inwieweit andere Unterteilungsmöglichkeiten als die vorgegebenen bestehen, ist, abgesehen von der Anpassung an unterschiedliche Schaltschrankhöhen, nicht angegeben.

In der DE 40 13 379 C2 ist ein Schaltschrank mit Rahmengestell und Schrankgefachen gezeigt, die mittels Teiltüren verschließbar sind. Die Gefache sind von Seitenwandabschnitten begrenzt, die im Wesentlichen einer Gefachhöhe entsprechen. Die Seitenwandabschnitte sind mittels Verbindungsschienen gehalten, die aus C-förmigen Führungsschienen 31 und L-förmigen Grundschienen zusammengesetzt sind, wobei ein horizontaler Schenkel der L-förmigen Grundschiene zur Aufnahme horizontaler Teilungsböden dient, die in einen Spalt zwischen einem Schenkel der C-förmigen Führungsschiene und dem horizontalen Schenkel der Grundschiene eingesetzt sind. Die Verbindungsschienen sind auf den einander zugekehrten Innenseiten vertikaler Rahmenschenkel an dort befindlichen Befestigungslochreihen festgelegt, wobei die C-förmigen Führungsschienen mit ihren seitlichen Schenkeln in den Innenraum vortreten. Diese Ausbildung ergibt zwar einfache Montagemöglichkeiten und Anordnungsmöglichkeiten, bedarf aber relativ aufwendiger Verbindungsschienen.

Auch ist eine Einteilung in horizontaler Richtung zum Erzielen mehrerer vertikal nebeneinander liegender Räume bei diesem Aufbau schwierig.

Der Erfindung liegt die Aufgabe zugrunde, eine Schaltschrankanordnung der eingangs genannten Art bereit zu stellen, mit der möglichst einfach variable Raumeinteilungen im Innenraum der Schaltschrankanordnung ermöglicht werden.

Diese Aufgabe wird mit den Merkmalen des Anspruches 1 gelöst. Hierbei ist vorgesehen, dass die Wandabschnitte zum Herstellen mehrerer horizontal übereinander liegender Teilräume in Form von Gefachen an gleiche oder verschiedene Teilraumhöhen angepasste Seitenwandabschnitte und angepasste, als Montageplatten ausgebildete Rückwandabschnitte sowie horizontale Raumteilerböden umfassen.

Mit den an die Teilraumhöhe angepassten Seitenwandabschnitten, Rückwandabschnitten und den horizontalen Raumteilerböden sind nach Art eines Baukastensystems verschiedene Raumaufteilungen in gewünschte Teilräume ohne großen Aufwand möglich, wobei auch einfache Umrüstmöglichkeiten bestehen. Dabei bilden die als Montageplatten ausgebildeten Rückwandabschnitte vielfältige Montagemöglichkeiten insbesondere für Funktionsräume zum Einbau von anwenderseitigen Gerätekomponenten. Dadurch wird ein modulares, flexibles System insbesondere für Niederspannungsanlagen erhalten.

Mit den Maßnahmen, dass die Höhen der Seitenwandabschnitte und Montageplatten auf ein Rastermaß von Befestigungslochreihen von in der Schaltschrankanordnung vorhandenen vertikalen Rahmenschenkeln und/oder vertikaler Montageschienen abgestimmt sind, werden die variablen Aufbaumöglichkeiten bei einfacher Montage begünstigt.

Ist vorgesehen, dass in Tiefenrichtung der Schaltschrankanordnung im Innenraum hinter den Gefachen ein sich vertikal über die gesamte Höhe des Schaltschrankinnern erstreckender Sammelschienenraum für ein Hauptschienensystem ausgebildet ist, so ergeben sich im rückwärtigen Bereich der Gefache vorteilhafte Anschlussmöglichkeiten für die Energieversorgung von in den Funktionsräumen angeordneten Gerätekomponenten.

Für die Bedienung sind die Maßnahmen von Vorteil, dass die Gefache frontseitig mit an ihre Höhe angepassten Teiltüren versehen sind.

Eine andere Ausgestaltungsvariante, die für eine erhöhte Sicherheit und/oder einen Gesamtüberblick Vorteile bietet, besteht darin, dass frontseitig vor den Gefachen eine sich über alle Gefache gegebenenfalls mit ihren Teiltüren erstreckende Fronttür angebracht ist.

Eine günstige Unterteilung und Abdichtung der Gefache insbesondere bei Teiltüren wird dadurch erreicht, dass vor dem frontseitigen Rand der Raumteilerböden im Querschnitt jeweils ein U-förmiger Trennsteg mit nach vorn gerichteter Öffnungsseite angeordnet ist, dessen Seitenschenkel mit ihren freien Enden in der Ebene der frontseitigen Ebene der Rahmenschenkel liegen.

Zu einer einfachen Montage tragen die Maßnahmen bei, dass die Seitenwandabschnitte in ihrem oberen Eckbereich nahe dem vertikalen Rand mit von dem Gefachinnenraum weg gerichteten, abgebogenen Hakenelementen mit nach unten gerichteten Einhängenasen versehen sind, die an die Öffnungen der Befestigungslochreihen angepasst sind.

Die Aneinanderreihung von Seitenwandabschnitten bei einfacher Montage wird dadurch begünstigt, dass die Seitenwandabschnitte an ihrem oberen Randbereich parallel zum Rand zunächst unter stumpfem Winkel schräg nach innen und oben und anschließend schräg nach außen und oben abgebogen sind. Durch die nach oben abgewinkelten freien Endabschnitte der Randbereiche wird der untere, insbesondere flache Randabschnitt einer darüber angeordneten Seitenwand beim Einhängen in die richtige Lage geführt und abgedeckt, wobei er durch entsprechende Dimensionierung in Höhenrichtung vorzugsweise hinter den abgewinkelten freien Endabschnitt ragt.

Günstige Montagemöglichkeiten an den Seitenwandabschnitten werden dadurch geboten, dass die Seitenwandabschnitte zumindest in ihrem unteren Randbereich mit einer horizontalen Lochanordnung versehen sind.

Die Anordnung der Raumteilerböden und ihre Verbindung mit den Seitenwandabschnitten wird dadurch vorteilhaft erreicht, dass zur Anbringung des Raumteilerbodens entlang der beiden gegenüberliegenden Seitenwandabschnitte Montagewinkel angeordnet sind, die einen vertikalen und einen horizontalen Schenkel aufweisen und die an den vertikalen Rahmenschenkeln, den vertikalen Montageschienen und/oder den Seitenwandabschnitten angebracht sind, und dass der jeweilige Raumteilerboden auf den gegeneinander gerichteten horizontalen Schenkeln der Montagewinkel befestigt ist.

Zu einer einfachen Montage tragen die Maßnahmen bei, dass die Montagewinkel über den inneren Rand der vertikalen Rahmenschenkel vorstehen und dass die Raumteilerböden in ihrer Breite höchstens dem Abstand der sich in Breitenrichtung der Schaltschrankanordnung gegenüberliegenden Innenseiten der vertikalen Rahmenschenkel entsprechen.

Die Zugänglichkeit der Funktionsräume und eine eindeutige Montage der Wandabschnitte werden dadurch begünstigt, dass die vertikalen Rahmenschenkel eine von dem lichten Öffnungsbereich des Schaltschrankes zurückversetzte Montageebene mit Befestigungslochreihen aufweisen, auf der die Seitenwandabschnitte angebracht sind.

Die Raumaufteilung des Schaltschrankinneren mit vorteilhaften Anordnungsmöglichkeiten eines Hauptschienensystems hinter den Funktionsräumen wird dadurch begünstigt, dass die Raumteilerböden in Tiefenrichtung bis zu den Montageplatten reichen und dass die Seitenwandabschnitte ebenfalls bis zu der Ebene der Montageplatten reichen und mit dort angeordneten vertikalen Montageschienen verbunden sind oder in Tiefenrichtung bis zu den hinteren vertikalen Rahmenschenkeln reichen und mit diesen gegebenenfalls in deren äußerer Montageebene verbunden sind.

Vorteile für die Anordnung und Zugänglichkeit von Verteilerschienen für die elektrische Energieversorgung in den Funktionsräumen ergeben sich ferner dadurch, dass die Raumteilerböden in ihrem rückseitigen Randbereich mit einem ausgebrochenen oder ausbrechbaren Ausschnitt versehen sind, durch den vertikale Verteilerschienen einschließlich einer eine Berührungssicherheit gewährleistenden Abdeckung geführt oder führbar sind.

Die Erfindung wird nachfolgend anhand von Ausführungsbeispielen unter Bezugnahme auf die Zeichnungen näher erläutert. Es zeigen:
- Fig. 1: eine Schaltschrankanordnung mit abgenommenen Türen und teilweise abgenommenen Wandelementen mit mehreren Funktionsräumen in perspektivischer Ansicht,
- Fig. 2A und 2B: eine Schaltschrankanordnung mit einem Schaltschrank mit mehreren durch vertikale Trennwände gebildeten Teilräumen in Draufsicht und mit mehreren horizontal abgetrennten Teilräumen in Frontansicht mit Teiltüren,
- Fig. 3: eine gläserne Darstellung eines Schaltschrankes mit horizontal getrennten Teilräumen, einem Verteilschienensystem und daran angeschlossenen Gerätekomponenten in perspektivischer Ansicht,
- Fig. 4: die Ausführung nach Fig. 3 in Frontansicht,
- Fig. 5: die Ausführung nach Fig. 3 in Draufsicht,
- Fig. 6: einen Ausschnitt eines Schaltschrankes mit mehreren horizontal voneinander getrennten Funktionsräumen in perspektivischer Vorderansicht mit Verteilschienensystem,
- Fig. 7: einen Ausschnitt eines Schaltschrankes in einem Eckbereich eines Teilraumes in Form eines Funktionsraumes in perspektivischer Ansicht,
- Fig. 8: einen Seitenwandbereich eines Schaltschrankes von innen mit seitlichen Wandabschnitten,
- Fig. 9: einen Seitenwandbereich eines Schaltschrankes mit einem gelösten Seitenwandabschnitt in perspektivischer Ansicht,
- Fig. 10: zwei unterschiedlich hohe Seitenwandabschnitte in perspektivischer Ansicht und einen vergrößerten Ausschnitt eines Seitenwandabschnittes in dessen Eckbereich,
- Fig. 11: eine Teil-Montageplatte in perspektivischer Ansicht,
- Fig. 12: eine Teiltür in perspektivischer Ansicht,
- Fig. 13: einen Montagewinkel in perspektivischer Ansicht,
- Fig. 14: einen Raumteilerboden in perspektivischer Ansicht und
- Fig. 15: einen Abschnitt eines Trennstegs in perspektivischer Ansicht.

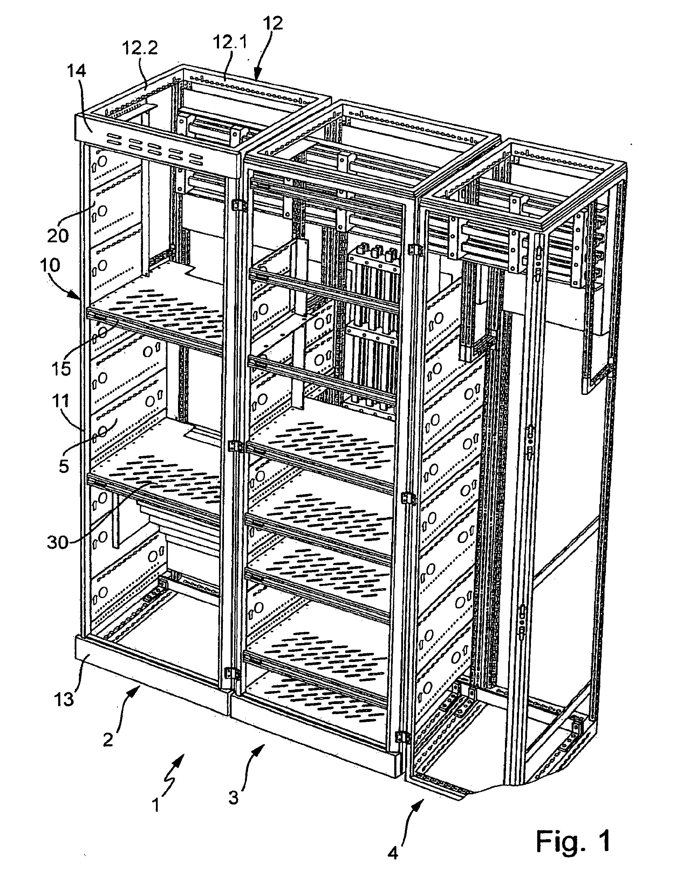

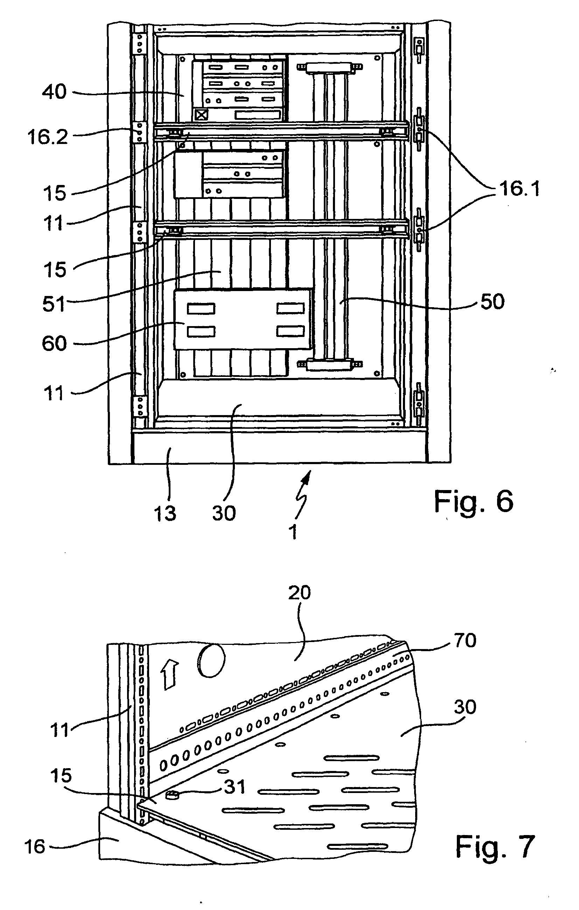

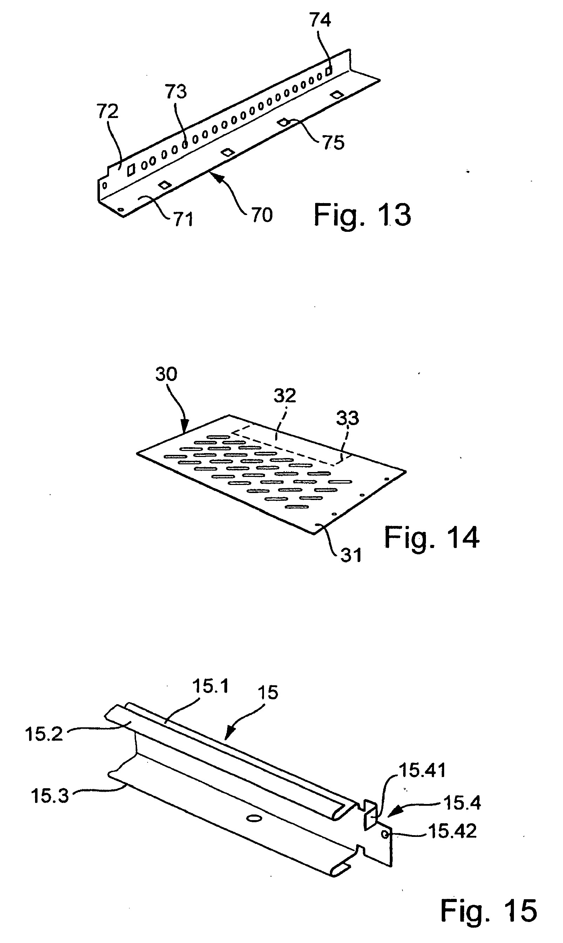

Fig. 1 zeigt eine Schaltschrankanordnung 1 mit mehreren mit ihren jeweiligen Rahmengestellen seitlich aneinander gereihten Schaltschränken 2, 3, 4, wobei der rechte Schaltschrank eine gegenüber den beiden anderen Schaltschränken 2, 3 geringere Breite besitzt und lediglich einen von unten bis oben durchgehenden Innenraum aufweist, während die beiden anderen Schaltschränke 2, 3 mehrere horizontal übereinander liegende Teilräume 5 in Form von Funktionsräumen unterschiedlicher Höhe aufweisen. Im rückwärtigen Bereich der Schaltschrankanordnung 1 ist ein Hauptschienensystem mit mehreren horizontal verlaufenden Stromschienen angeordnet, während in dem mittleren Schaltschrank 3 vertikale Verteilschienen angeordnet sind, die an die Hauptschienen mittels elektrisch leitender, in den Stromführungseigenschaften angepasster Verbindungselemente angeschlossen sind. Die Verteilschienen verlaufen senkrecht durch mehrere Funktionsräume und sind auf der Vorderseite von Rückwandabschnitten in Form von den Funktionsräumen zugeordneten Montageplatten 40 mittels entsprechender Sammelschienenhalter montiert und vom Innenraum der Funktionsräume aus zugänglich. Auf den Verteilschienen sind entsprechende Geräteadapter für den Anschluss von Gerätekomponenten kontaktierend aufgesetzt. Zwischenräume zwischen den Geräteadaptern sind mittels isolierender Abdeckungen berührungssicher zum Innenraum der Funktionsräume hin verschlossen. Die Verteilschienen verlaufen durch mehrere übereinander angeordnete Funktionsräume, wobei im hinteren Bereich von horizontalen Raumteilerböden 30 (vgl. auch Fig. 6 und 14) entsprechende Ausschnitte 32 vorgesehen sind, die an die Ausdehnung der Verteilschienen mit Abdeckungen angepasst sind.

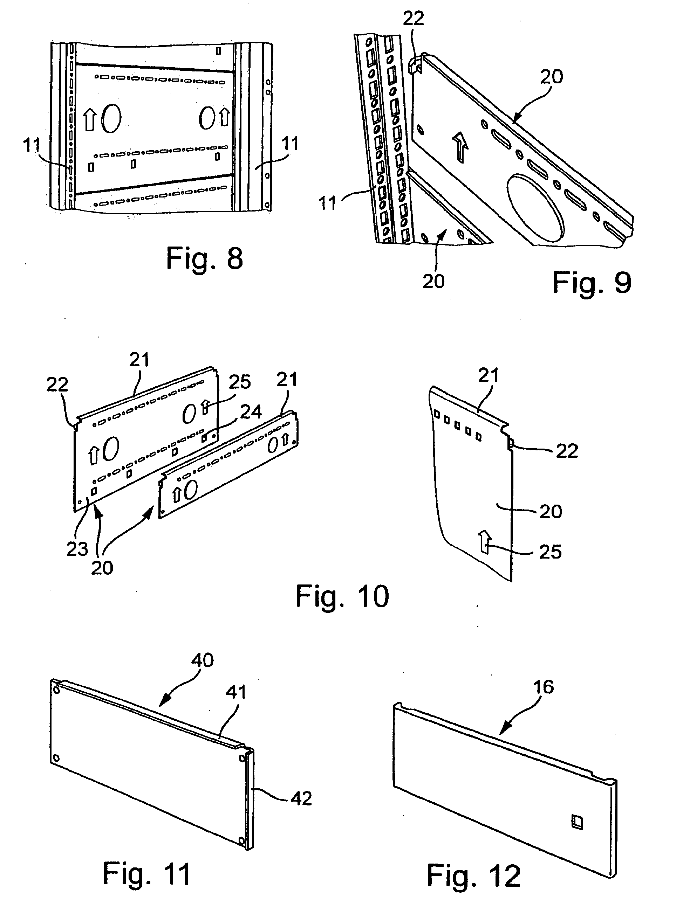

Ferner zeigt Fig. 1, dass die Schaltschränke 2, 3, 4 Rahmengestelle 10 mit vier in den Eckbereichen angeordneten vertikalen Rahmenschenkeln 11 und Deckrahmen mit in Breitenrichtung und Tiefenrichtung verlaufenden Rahmenschenkeln 12.1 bzw. 12.2 aufweisen. Ferner sind die Schaltschränke 2, 3, 4 mit jeweiligen Sockeln 13 versehen. Im Bereich des vorderen Randes der Raumteilerböden 30 sind im Querschnitt U-förmige Trennstege 15 angeordnet, deren Öffnungsseiten nach vorn gerichtet sind, wobei die freien Enden der Seitenschenkel 15.1, 15.3 bündig sind mit den vorderen Rändern der vertikalen Rahmenschenkel 11 bzw. der Frontebene des Rahmengestells 10. Auf der Vorderseite des Deckrahmens 12 ist eine obere Frontblende 14 angebracht. Zum Verschließen der Frontseite der Schaltschränke ist entweder eine von oben bis unten durchgehende Fronttür oder es sind den jeweiligen Funktionsräumen zugeordnete und in der Höhe angepasste Teiltüren 16 (vgl. Fig. 12) vorgesehen, die an jeweiligen, an den vertikalen Rahmenschenkeln 11 angebrachten Scharnierteilen 16.1 mit komplementären Scharnierteilen gelenkig gelagert und an jeweils zugeordneten, an den gegenüberliegenden vertikalen Rahmenschenkeln 11 angeordneten Verschlussteilen 16.2 getrennt verschließbar sind.

Die horizontal übereinander liegenden Teilräume 5 in Form der Funktionsräume sind seitlich mit an die Höhe der Funktionsräume angepassten Seitenwandabschnitten 20 begrenzt, die mit ihrem vorderen vertikalen Randbereich an den dortigen vertikalen Rahmenschenkeln 11 und an ihrem hinteren vertikalen Randbereich entweder an den hinteren vertikalen Rahmenschenkeln 11 oder an vertikalen Montageschenkeln angebracht sind, die in der Ebene der Rückwandabschnitte der Funktionsräume angeordnet sind. Zusätzlich zu den die Funktionsräume seitlich begrenzenden Seitenwandabschnitten 20 sind die betreffenden Schaltschränke 2 bzw. 4 mit durchgehenden äußeren Seitenwänden abgeschlossen, ebenso wie auch die Rückseite der Schrankanordnung 1 sowie deren Oberseite.

Die Seitenwände 20 sind an ihrem oberen Randbereich zunächst unter stumpfem Winkel schräg nach innen und oben bezüglich des Funktionsraums und dann wiederum nach außen und oben parallel zu dem oberen Rand abgewinkelt, wie auch die Fig. 9 und 10 erkennen lassen. Im oberen Eckbereich ist ein nach außen von der Ebene des Seitenwandabschnittes 20 vorstehendes abgebogenes Hakenelement 22 angeordnet, das an die Länge von vertikal gerichteten Langlöchern in dem betreffenden vertikalen Rahmenschenkel 11 bzw. Montageschenkel angepasst und in diesen mit einer nach unten zeigenden Haltenase einhängbar ist. Dabei ist vorzugsweise vorgesehen, dass die vertikalen Rahmenschenkel 11 eine den vorderen Rahmenbereich des Rahmengestells 10 umgrenzende innere seitliche Montageebene und eine davon von der Frontseite abgekehrt liegende zur Seite nach außen abgesetzte, ebenfalls zur Innenseite der Rahmenschenkel 11 gekehrte äußere seitiche Montageebene aufweisen, wobei sowohl die innere als auch die äußere Montageebene der vertikalen Rahmenschenkel 11 Befestigungslochreihen aufweisen. Die Seitenwandabschnitte 20 sind mit den Hakenelementen vorzugsweise in der äußeren, seitlich zurückversetzten Montageebene eingehängt, wobei auch der vertikale Montageschenkel eine entsprechende Befestigungslochreihe in der entsprechenden Ebene aufweist. Zusätzlich zu den Hakenelementen 22 sind im unteren vorderen und hinteren Eckbereich der Seitenwandabschnitte 20 Befestigungslöcher angeordnet, die sich mit Befestigungsöffnungen in den vertikalen Rahmenschenkeln 11 bzw. den betreffenden vertikalen Montageschenkeln decken und zum Sichern eine Schraubverbindung ermöglichen. Zudem weisen die Seitenwandabschnitte 20 an ihrem unteren Randbereich 23 und gegebenenfalls auch in ihrem oberen Randbereich 21 bzw. oberen Abschnitt eine horizontal verlaufende Lochanordnung 24 auf. Zur richtigen Orientierung mit dem in der genannten Weise abgebogenen oberen Rand nach oben sind die Seitenwandabschnitte 20 jeweils mit Ausrichtmarken 25 in Form eines nach oben gerichteten Pfeils versehen. Ferner weisen sie eine mittels einer abnehmbaren Platte abgedeckte oder an einer Perforierung ausbrechbare Öffnung für eine seitliche Zugänglichkeit z. B. in einen daneben angeordneten Kabelraum auf. Die Seitenwandabschnitte 20 sind in ihrer Höhe an die Höhe eines Funktionsraumes vorzugsweise in einem bestimmten Rastermaß, insbesondere entsprechend ganzzahligen Vielfachen von Höheneinheiten HE angepasst. Dabei können Seitenwandabschnitte 20 unterschiedlicher Höhe vorgesehen sein, um unterschiedlich hohe Funktionsräume zu bilden.

Entsprechend sind auch die Höhen der Teil-Montageplatten 40 und der Teiltüren 16 in einem bestimmten Rasterabstand, insbesondere entsprechend ganzzahligen Vielfachen von Höheneinheiten an die Höhe von Funktionsräumen angepasst, so dass sich eine Art Baukastensystem zum Aufbau gewünschter Funktionsräume ergibt, die entsprechend den Lochreihen und deren Raster in den vertikalen Rahmenschenkeln 11 sowie den vertikalen Montageschenkeln auch in unterschiedlichen Höhen des Schaltschrankinnenraums anordenbar sind.

Zum Anordnen der Raumteilerböden 30 sind seitlich an den Seitenwandabschnitten 20 und/oder den vertikalen Rahmenschenkeln 11 bzw. den vertikalen Montageschienen anbringbare Montagewinkel 70 vorgesehen, die mit einem vertikalen Schenkel 72 entlang dem betreffenden Seitenwandabschnitt 20 verlaufen und mit ihrem horizontalen Schenkel 71 zum Inneren des Schrankraumes vorstehen, wobei zwei sich gegenüberliegende horizontale Schenkel 71 einen Raumteilerboden 30 auf ihrer Oberseite aufnehmen, der mittels in Öffnungen einer Lochreihe 73 bzw. einer Lochanordnung 31 (vgl. Fig. 13 und 14) eingreifender Elemente, insbesondere Schrauben verbindbar ist. Die horizontalen Schenkel 71 stehen dabei über die innere Montageebene der vertikalen Rahmenschenkel 11 in den Innenraum vor und die Ausdehnung des Raumteilerbodens 30 in Breitenrichtung ist vorteilhafterweise höchstens so breit bemessen, wie der Abstand zweier sich gegenüberliegender innerer Montageebenen, so dass der Raumteilerboden 30 ohne Schwierigkeiten in den Schaltschrankinnenraum eingeführt und an den Montagewinkeln 70 festgelegt werden kann, wobei auch der Ausschnitt 32 relativ zu den Verteilschienen passend positioniert ist.

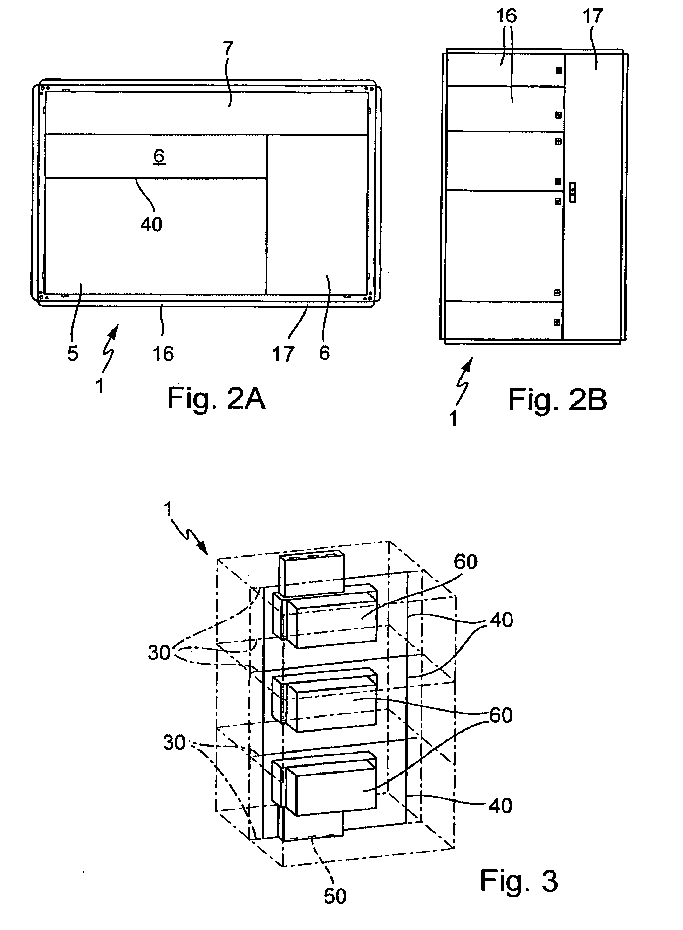

Die Fig. 2A und 2B zeigen Raumeinteilungsmöglichkeiten des Innenraums eines Schaltschranks zum einen in horizontaler Richtung durch Vertikaltrennwände und zum anderen in vertikaler Richtung durch die horizontalen Raumteilerböden 30.

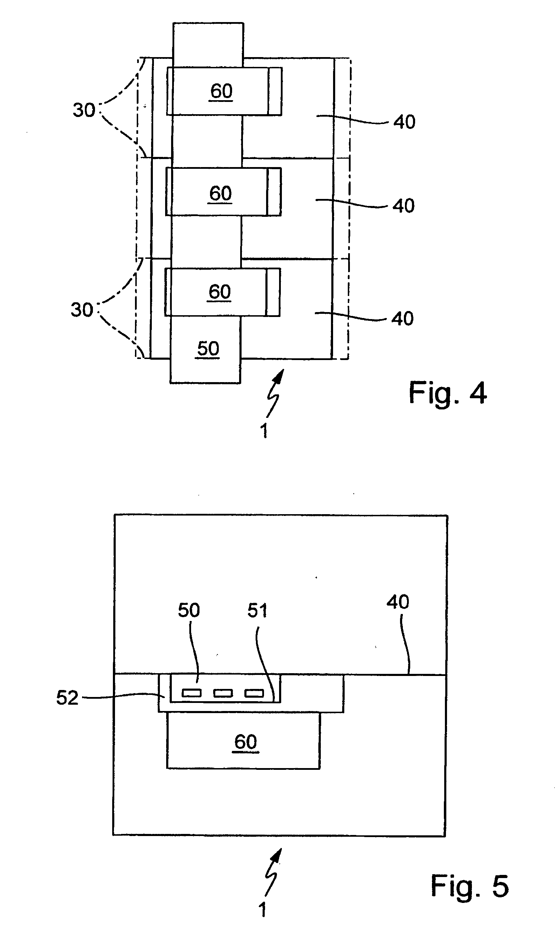

Die Fig. 3, 4, 5 lassen die Verteilschienenanordnung 50 mit Sammelschienenabdeckung 51 und auf die Verteilschienenanordnung 50 aufgesetzten Geräteadaptern 52 sowie daran angeschlossenen Schaltgeräten 60 erkennen. Auch Fig. 6 lässt die durch mehrere Funktionsräume verlaufende Anordnung der Verteilschienen 50 und ihre Durchführung durch die Ausschnitte 32 im hinteren Bereich der Raumteilerböden 30 erkennen. Wie Fig. 14 zeigt, kann der Ausschnitt 32 mittels einer Perforierung 33 im hinteren Randbereich des Raumteilerbodens 30 zum einfachen Ausbrechen vorbereitet sein, wobei der Ausschnitt 32 zum hinteren Rand des Raumteilerbodens 30 offen ist, so dass auch dadurch der Raumteilerboden 30 ohne weiteres nachträglich in beliebiger Höhe des Schaltschrankinnenraumes angeordnet und auch wieder herausgenommen werden kann, ohne die Verteilschienenanordnung 50 entfernen zu müssen.

Wie die Fig. 13 erkennen lässt, kann der Montagewinkel 70 mittels Befestigungslöchern 74, 75 und gegebenenfalls zur Seite auf der vom Innenraum abgekehrten Rückseite ausgebogener hakenförmiger Laschen an dem betreffenden Seitenwandabschnitt in deren Lochanordnung 24 eingehängt bzw. mit diesem verbunden werden.

Wie Fig. 15 zeigt, besitzen die U-förmigen Trennstege 15 in Verlängerung ihres Grundsteges 15.2 seitliche Befestigungsabschnitte 15.4 (auf beiden Seiten), die im eingebauten Zustand Absätze an den vertikalen Rahmenschenkeln 11 auf deren Rückseite hintergreifen und mittels durch Befestigungsöffnungen eingeführter Schrauben von der Rückseite befestigt werden. Außerdem können im Eckbereich der Befestigungsabschnitte 15.4 Freibereiche und zurückgebogene Halteelemente 15.41 gebildet sein.

Der beschriebene modulare Aufbau für die Teilräume im Inneren des Schaltschrankes lässt eine variable Gestaltung bei einfacher Montage zu, wobei auch hohe Anforderungen an die Funktionssicherheit erfüllt werden, wie sie bei Niederspannungsanlagen gefordert sind.

## Patentansprüche

1. Schaltschrankanordnung mit mindestens einem Schaltschrank (2, 3, 4), der vertikale Rahmenschenkel (11) sowie Montageschienen aufweist und mittels Wandabschnitten in mehrere allseitig umschlossene quaderförmige Teilräume unterteilt oder unterteilbar ist, wozu vertikale Wandabschnitte mit horizontaler Unterteilung vorgesehen sind, wobei die Wandabschnitte zum Herstellen mehrerer horizontaler übereinander liegender Teilräume in Form von Gefachen (5) an gleiche oder verschiedene Teilraumhöhen angepasste Seitenwandabschnitte (20) und angepasste, als Montageplatten (40) ausgebildete Rückwandabschnitte sowie horizontale Raumteilerböden (30) umfassen,
**dadurch gekennzeichnet,**
**dass** die Höhen der Seitenwandabschnitte (20) und Montageplatten (40) auf ein Rastermaß von Befestigungslochreihen der in der Schaltschrankanordnung vorhandenen vertikalen Rahmenschenkel (11) und/oder vertikalen Montageschienen entsprechend ganzzahligen Vielfachen von Höheneinheiten abgestimmt sind und
**dass** die vertikalen Rahmenschenkel (11) eine von dem lichten Öffnungsbereich des Schaltschrankes (2, 3, 4) zurückversetzte Montageebene mit Befestigungslochreihen aufweisen, auf der die Seitenwandabschnitte (20) angebracht sind.

2. Schaltschrankanordnung nach Anspruch 1,
**dadurch gekennzeichnet,**
**dass** in Tiefenrichtung der Schaltschrankanordnung im Innenraum hinter den Gefachen (5) ein sich vertikal über die gesamte Höhe des Schaltschrankinnern erstreckender Sammelschienenraum für ein Hauptschienensystem ausgebildet ist.

3. Schaltschrankanordnung nach einem der vorhergehenden Ansprüche,
**dadurch gekennzeichnet,**
**dass** die Gefache (5) frontseitig mit an ihre Höhe angepassten Teiltüren (16) versehen sind.

4. Schaltschrankanordnung nach einem der vorhergehenden Ansprüche,
**dadurch gekennzeichnet,**
**dass** frontseitig vor den Gefachen (5) eine sich über alle Gefache (5) gegebenenfalls mit ihren Teiltüren (16) erstreckende Fronttür angebracht ist.

5. Schaltschrankanordnung nach einem der vorhergehenden Ansprüche,
**dadurch gekennzeichnet,**
**dass** vor dem frontseitigen Rand der Raumteilerböden (30) im Querschnitt jeweils ein U-förmiger Trennsteg (15) mit nach vorn gerichteter Öffnungsseite angeordnet ist, dessen Seitenschenkel mit ihren freien Enden in der Ebene der frontseitigen Ebene der Rahmenschenkel (11) liegen.

6. Schaltschrankanordnung nach einem der Ansprüche 2 bis 5,
**dadurch gekennzeichnet,**
**dass** die Seitenwandabschnitte (20) in ihrem oberen Eckbereich nahe dem vertikalen Rand mit von dem Gefachinnenraum weg gerichteten, abgebogenen Hakenelementen (32) mit nach unten gerichteten Einhängenasen versehen sind, die an die Öffnungen der Befestigungslochreihen angepasst sind.

7. Schaltschrankanordnung nach einem der vorhergehenden Ansprüche,
**dadurch gekennzeichnet,**
**dass** die Seitenwandabschnitte (20) an ihrem oberen Randbereich parallel zum Rand zunächst unter stumpfem Winkel schräg nach innen und oben und anschließend schräg nach außen und oben abgebogen sind.

8. Schaltschrankanordnung nach einem der vorhergehenden Ansprüche,
**dadurch gekennzeichnet,**
**dass** die Seitenwandabschnitte (20) zumindest in ihrem unteren Randbereich mit einer horizontalen Lochanordnung versehen sind.

9. Schaltschrankanordnung nach einem der vorhergehenden Ansprüche,
**dadurch gekennzeichnet,**
**dass** zur Anbringung des Raumteilerbodens (30) entlang der Seitenwandabschnitte (20) Montagewinkel (70) angeordnet sind, die einen vertikalen (71) und einen horizontalen Schenkel (72) aufweisen und die an den vertikalen Rahmenschenkeln (11), den vertikalen Montageschienen und/oder den Seitenwandabschnitten (20) angebracht sind, und
**dass** der jeweilige Raumteilerboden auf den gegeneinander gerichteten horizontalen Schenkeln (72) der Montagewinkel (70) befestigt ist.

10. Schaltschrankanordnung nach Anspruch 9,
**dadurch gekennzeichnet,**
**dass** die Montagewinkel (70) über den inneren Rand der vertikalen Rahmenschenkel (11) vorstehen und
**dass** die Raumteilerböden (30) in ihrer Breite höchstens dem Abstand der sich in Breitenrichtung der Schaltschrankanordnung gegenüberliegenden vertikalen Rahmenschenkel (11) entsprechen.

11. Schaltschrankanordnung nach einem der vorhergehenden Ansprüche,
**dadurch gekennzeichnet,**
**dass** die Raumteilerboden (30) in Tiefenrichtung bis zu den Montageplatten (40) reichen und
**dass** die Seitenwandabschnitte (20) ebenfalls bis zu der Ebene der Montageplatten (40) reichen und mit dort angeordneten vertikalen Montageschienen verbunden sind oder in Tiefenrichtung bis zu den hinteren vertikalen Rahmenschenkeln reichen und mit diesen gegebenenfalls in deren äußerer Montageebene verbunden sind.

12. Schaltschrankanordnung nach einem der vorhergehenden Ansprüche,
**dadurch gekennzeichnet,**
**dass** die Raumteilerböden (30) in ihrem rückseitigen Randbereich mit einem ausgebrochenen oder ausbrechbaren Ausschnitt (32) versehen sind, durch den vertikale Verteilerschienen einschließlich einer eine Berührungssicherheit gewährleistenden Abdeckung geführt oder führbar sind.

## Claims

1. A control box arrangement comprising at least one control box (2, 3, 4) having vertical frame legs (11) as well as mounting rails and having an interior subdivided or subdividable by wall sections into a plurality of cuboid compartments enclosed on all sides by vertical wall sections with a horizontal subdivision, for producing a plurality of horizontal compartments arranged one above the other in the form of cubbyholes (5), the wall sections including side wall sections adapted to a same compartment height or a different compartment height, adapted rear wall sections embodied as mounting plates (40), and horizontal compartment-dividing floors (30),
**characterized in that**
the heights of the side wall sections (20) and the mounting plates (40) are matched to a spacing dimension of rows of fastening holes of the vertical frame legs (11) and/or the vertical mounting rails positioned in the control box arrangement, and
the vertical frame legs (11) have a mounting plane recessed with respect to the internal opening region of the control box (2, 3, 4) and have rows of fastening holes to which the sidewall sections (20) are mounted.

2. The control box arrangement according to claim 1, **characterized in that** a bus bar compartment for a main rail system extends vertically over the entire height of the control box interior, positioned inside behind the cubbyholes (5) in the depth direction of the control box arrangement.

3. The control box arrangement according to one of the preceding claims, **characterized in that** the fronts of the cubbyholes (5) have respective compartment doors (16) adapted to the heights of the fronts.

4. The control box arrangement according to one of the preceding claims, **characterized in that** a front door that extends all over the cubbyholes (5) is in front of the cubbyholes (5), each of which having a respective compartment door (16).

5. The control box arrangement according to one of the preceding claims, **characterized in that** a divider strip (15) with a U-shaped cross section is positioned in front of the front edge of the compartment-dividing floors (30) with its open side oriented towards the front and the free ends of its side legs positioned in the same plane as the front plane of the frame legs (11).

6. The control box arrangement according to one of claims 2 to 5, **characterized in that** the side wall sections (20) in their upper corner region closed to the vertical edge have bent hook elements (32) oriented away from the cubbyhole interior and have downward oriented securing protrusions adapted to the openings in the rows of the fastening holes.

7. The control box arrangement according to one of the preceding claims, **characterized in that** in their upper edge region each of the side wall sections are first bent diagonally inward and upward at an obtuse angle parallel to the edge and are then bent diagonally outward and upward.

8. The control box arrangement according to one of the preceding claims, **characterized in that** the side wall sections (20) have a horizontal arrangement of holes at least in their lower edge region.

9. The control box arrangement according to one of the preceding claims, **characterized in that** mounting angles (70) attach the compartment-dividing floor (30) along the side wall sections (20), the mounting angles having a vertical leg (71) and a horizontal leg (72) and are attached to the vertical frame legs (11), the vertical mounting rails and/or the side wall sections (20) with the respective compartment-dividing floor are fastened to the opposing horizontal legs (72) of the mounting angles (70).

10. The control box arrangement according to claim 9, **characterized in that** the mounting angles (70) protrude beyond the inner edge of the vertical frame legs (11) and the width of the compartment-dividing floors (30) is utmost as wide as the distance between the opposing vertical frame legs in a width direction of the control box arrangement.

11. The control box arrangement according to one of the preceding claims, **characterized in that** the compartment-dividing floors (30) extend in the depth direction to the mounting plates (40), and the side wall sections (20) extend to the plane of the mounting plates (40) and are attached to vertical mounting rails or extend in the depth direction to the rear vertical frame legs and are attached to them, optionally in their outer mounting plane.

12. The control box arrangement according to one of the preceding claims, **characterized in that** the compartment-dividing floors (30) have a rear edge region with a cut out (32) that is broken out or can be broken out, through which vertical distribution rails, together with a cover that prevents them from being touched, are or can be routed.

## Revendications

1. Ensemble d'armoire de commande avec au moins une armoire de commande (2, 3, 4), lequel ensemble comporte des montants verticaux (11), ainsi que des rails de montage, et est divisé ou peut être divisé par des sections de paroi en une pluralité de sous-parties parallélépipédiques fermées de toutes parts, des sections de paroi verticales avec un cloisonnement horizontal étant prévues à cet effet, les sections de paroi comportant, pour la réalisation de plusieurs sous-parties en forme de compartiments (5), disposés horizontalement les unes au-dessus des autres, des sections de paroi latérale ajustées à des hauteurs de sous-parties identiques ou différentes et des sections de paroi arrière adaptées, réalisées sous forme de plaques de montage (40), ainsi que des fonds de séparation (30) horizontaux,
**caractérisé**
**en ce que** les hauteurs des sections de paroi latérale (20) et des plaques de montage (40) sont ajustées à la dimension d'écartement des séries de trous de fixation des montants verticaux (11), présents dans l'ensemble d'armoire de commande, et/ou à des rails de montage verticaux conformément à des multiples entiers d'unités de hauteur, et
**en ce que** les montants verticaux (11) comportent un plan de montage, décalé en arrière par rapport à la zone d'ouverture de l'armoire de commande (2, 3, 4) et muni de séries de trous de fixation, sur lequel sont attachés les sections de paroi latérale (20).

2. Ensemble d'armoire de commande selon la revendication 1, **caractérisé en ce que** dans le sens de la profondeur de l'ensemble d'armoire de commande, à l'intérieur derrière les compartiments (5), est réalisé un espace pour barres de distribution, qui est destiné à recevoir un système de rails principaux et qui s'étend verticalement sur toute la hauteur de l'intérieur de l'armoire de commande.

3. Ensemble d'armoire de commande selon l'une quelconque des revendications précédentes, **caractérisé en ce que** les compartiments (5), sur leur face frontale, sont munis de portes partielles (16) adaptées à la hauteur desdits compartiments.

4. Ensemble d'armoire de commande selon l'une quelconque des revendications précédentes, **caractérisé en ce que** sur la face frontale, devant les compartiments (5), est montée une porte frontale qui couvre tous les compartiments (5), le cas échéant avec leurs portes partielles (16).

5. Ensemble d'armoire de commande selon l'une quelconque des revendications précédentes, **caractérisé en ce que** devant le bord frontal des fonds de séparation (30) est disposée une barre de séparation (15) à section transversale en forme de U, dont le côté ouvert est dirigé vers l'avant et dont les branches latérales se situent avec leurs extrémités libres dans le plan du plan frontal des montants verticaux (11).

6. Ensemble d'armoire de commande selon l'une quelconque des revendications 2 à 5, **caractérisé en ce que** les sections de paroi latérale (20), dans leur zone d'angle supérieure à proximité du bord vertical, sont munies de crochets (32) coudés, dirigés en s'écartant du volume intérieur des compartiments, avec des becs d'accrochage orientés vers le bas, lesquels sont ajustés aux orifices des séries de trous de fixation.

7. Ensemble d'armoire de commande selon l'une quelconque des revendications précédentes, **caractérisé en ce que** les sections de paroi latérale (20), au niveau de leur zone de bordure supérieure, sont repliées parallèlement au bord en formant tout d'abord un angle obtus en oblique vers l'intérieur et le haut et ensuite en oblique vers l'extérieur et le haut.

8. Ensemble d'armoire de commande selon l'une quelconque des revendications précédentes, **caractérisé en ce que** les sections de paroi latérale (20), au moins dans leur zone de bordure inférieure, sont munies d'un système de perforation horizontal.

9. Ensemble d'armoire de commande selon l'une quelconque des revendications précédentes, **caractérisé en ce que** pour le montage du fond de séparation (30), des cornières de montage (70) sont disposées le long des sections de paroi latérale (20), lesquelles comportent une branche verticale (71) et une branche horizontale (72) et lesquelles sont montées sur les montants verticaux (11), les rails de montage verticaux et/ou les sections de paroi latérale (20), et **en ce que** le fond de séparation concerné est fixé sur les branches horizontales (72) face à face sur les cornières de montage (70).

10. Ensemble d'armoire de commande selon la revendication 9, **caractérisé en ce que** les cornières de montage (70) s'avancent au-delà du bord intérieur des montants verticaux (11), et **en ce que** la largeur des fonds de séparation (30) correspond au maximum à la distance entre les montants verticaux (11) se faisant face dans le sens de la largeur de l'ensemble d'armoire de commande.

11. Ensemble d'armoire de commande selon l'une quelconque des revendications précédentes, **caractérisé en ce que** les fonds de séparation (30) s'étendent dans le sens de la profondeur jusqu'aux plaques de montage (40), et **en ce que** les sections de paroi latérale (20) s'étendent également jusqu'au plan des plaques de montage (40) et sont assemblées à des rails de montage verticaux disposés à cet emplacement ou s'étendent dans le sens de la profondeur jusqu'aux montants verticaux arrière et sont assemblées à ceux-ci, le cas échéant, dans leur plan de montage extérieur.

12. Ensemble d'armoire de commande selon l'une quelconque des revendications précédentes, **caractérisé en ce que** les fonds de séparation (30), dans leur zone de bordure arrière, sont munis d'une découpe (32) enlevée ou pouvant être enlevée, à travers laquelle sont guidés ou peuvent être guidés des rails de distribution verticaux, y compris un couvercle garantissant une protection contre tout contact.
